**Europäisches Patentamt**

**European Patent Office**

**Office européen des brevets**

(19)

(11) Veröffentlichungsnummer : **0 397 003 B1**

(12) # EUROPÄISCHE PATENTSCHRIFT

(45) Veröffentlichungstag der Patentschrift :
**25.08.93 Patentblatt 93/34**

(51) Int. Cl.$^5$ : **C08L 51/04, C08L 25/04,
// (C08L51/04, 51:04),
(C08L25/04, 51:04)**

(21) Anmeldenummer : **90108207.3**

(22) Anmeldetag : **30.04.90**

(54) **Thermoplastische Formmasse.**

(30) Priorität : **11.05.89 DE 3915363**

(43) Veröffentlichungstag der Anmeldung :
**14.11.90 Patentblatt 90/46**

(45) Bekanntmachung des Hinweises auf die
Patenterteilung :
**25.08.93 Patentblatt 93/34**

(84) Benannte Vertragsstaaten :
**BE DE ES FR GB IT NL**

(56) Entgegenhaltungen :
**EP-A- 0 081 761
DE-B- 1 273 180**

(73) Patentinhaber : **BASF Aktiengesellschaft
Carl-Bosch-Strasse 38
D-67063 Ludwigshafen (DE)**

(72) Erfinder : **Blumenstein, Uwe, Dr.
Ganderhofstrasse 2
D-6700 Ludwigshafen (DE)**
Erfinder : **Echte, Adolf, Dr.Prof.
Leuschnerstrasse 42
D-6700 Ludwigshafen (DE)**
Erfinder : **Klaerner, Peter, Dr.
Haupstrasse 62
D-6719 Battenberg (DE)**

EP 0 397 003 B1

## Beschreibung

Die Erfindung betrifft eine verbesserte Formmasse auf der Grundlage von schlagzäh modifiziertem Polystyrol.

Solche Formmassen sind schon in großer Vielfalt bekannt geworden und im Handel.

Wünschenswert ist jedoch nach wie vor die Verbesserung der Spannungsrißbeständigkeit (auch unter Lösungsmitteleinfluß), der Haftungseigenschaften für Schaumstoffe und der Kälteschlagzähigkeit. Solche Eigenschaften werden z.B. im Kühlmöbelbau geschätzt.

Dabei ist insbesondere auszugehen von den Lehren und Ergebnissen, die sich aus den folgenden Druckschriften ergeben:

(1) DAS 1 273 180
(2) US 4 214 056
(3) US 3 509 237
(4) US 4 366 289
(5) H. Keskkula, D.R. Paul, K.M. McCreedy und D.H. Henton, Polymer 28, 2063-2069 (1987)
(6) M.E. Fowler, H. Keskkula und D.R. Paul, Polymer 28, 1703-1711 (1987)
(7) H. Keskkula, ACS Symposium Polym. Mater. Sci. Eng. 57, 674-678 (1987)
(8) US 4 330 641

In (1) wird die Extrusion von schlagfestem Polystyrol mit einem Emulsionspfropfkautschuk beschrieben, der einen Polybutadienkern und eine Polystyrolpfropfhülle besitzt. Das Produkt ist in seiner Schlagzähigkeit sowohl dem eingesetzten schlagfesten Polystyrol als auch einem nur mit dem Emulsionpfropfkautschuk zähmodifizierten Polystyrol überlegen.

Dieser Effekt beruht wahrscheinlich auf der synergistischen Wechselwirkung zwischen groß- und kleinteiliger Kautschukphase, wie sie zum Beispiel aus (2) und (3) bekannt ist.

In (4) bis (7) wird die Möglichkeit beschrieben, durch das Abmischen eines schlagfesten Polystyrols (mit großteiliger Kautschukmorphologie) mit einem kleinteiligen Emulsionskautschuk, der einen Polybutadienkern und eine PMMA-Pfropfhülle besitzt, die Schlagzähigkeit stark anzuheben, obwohl PMMA unverträglich mit Polystyrol ist. Hervorgehoben wird dabei insbesondere die verträglichkeitsvermittelnde Wirkung derartiger Emulsionspfropfkautschuke für ansonsten miteinander unverträgliches PS-und SAN-Matrizes. Beansprucht werden in (4) als Pfropfhülle der Emulsionskautschuke Acrylate mit der allgemeinen Formel $CH_2=C(R^1)-C(O)-R^2$.

Aus (8) lernt man, daß zur Erhöhung der Spannungsrißbeständigkeit bei schlagfestem Polystyrol (von Copolymeren abgesehen) mit einheitlicher Kautschukmorphologie ein Teilchendurchmesser notwendig ist, der größer als 3,5 μm ist.

Es wurde nun gefunden, daß Mischungen von Polystyrol mit bestimmten Emulsionspfropfkautschuk-Sorten möglich sind, und zwar mit einem core-/shell-Emulsionskautschuk, der eine mit Polystyrol nur teilweise verträgliche S/SAN-Hülle besitzt, und daß solche Mischungen u.a. eine erhöhte Schlagzähigkeit, aber auch neben einer verbesserten Schaumhaftung eine beträchtliche Spannungsrißbeständigkeit aufweisen.

Unmittelbarer Erfindungsgegenstand ist eine Formmasse aus einer Matrix aus Polystyrol oder - vorzugsweise - schlagzäh modifiziertem Polystyrol und in Form diskreter Partikel eingelagertem Kautschuk; die Formmasse besteht überwiegend, d.h. zu wenigstens 50 Gew.-% Polystyrol A und ferner aus einer wirksamen Menge von z.B. mindestens 10 bis zu 50 Gew.-% eines Pfropfkautschuks B. Dieser besteht erfindungsgemäß aus 40 bis 95 Gew.-% eines kautschukelastischen Pfropfkerns $b_1$ und 5 bis 60 Gew.-% einer Pfropfhülle $b_2$; die Pfropfhülle $b_2$ ist ihrerseits und erfindungsgemäß aufgebaut aus einer ersten Pfropfhülle $b_{21}$, die 5 bis 50 Gew.-% der gesamten Pfropfhülle $b_2$ ausmacht und aus Styrol besteht und 50 bis 95 Gew.-% einer zweiten Pfropfhülle $b_{22}$. Die zweite Pfropfhülle $b_{22}$ ist nun aufgebaut aus 60 bis 90 Gew.-% Styrol $b_{221}$) und 10 bis 40 Gew.-% Acrylnitril $b_{222}$), wobei A und B, $b_1$ und $b_2$, $b_{21}$ und $b_{22}$ sowie $b_{221}$ und $b_{222}$ sich jeweils zu 100 Gew.-% ergänzen.

Bevorzugt hat die erfindungsgemäße Formmasse folgende Zusammensetzung:

60 bis 90 Gew.-% A;
10 bis 40 Gew.-% B;
50 bis 90 Gew.-% $b_1$;
10 bis 50 Gew.-% $b_2$;
7 bis 40 Gew.-% $b_{21}$;
60 bis 93 Gew.-% $b_{22}$
65 bis 85 Gew.-% $b_{221}$
15 bis 35 Gew.-% $b_{222}$.

Darüber hinaus kann sie übliche Hilfs- und Zusatzstoffe enthalten und kann mit geeigneten, bzw. verträglichen anderen Polymeren, z.B. mit Polyphenylenether in allen Verhältnissen gemischt werden. Solche Blends weisen z.T. besonders vorteilhafte Eigenschaften auf.

Zur Herstellung der erfindungsgemäßen Formmasse wird ein spezieller Emulsionspfropfkautschuk mit schlagfestem Polystyrol abgemischt. Diese Formmasse weist folgende Vorzüge auf:

1. Die vorteilhaften Eigenschaften der Formmasse werden mit einem Emulsionspfropfkautschuk erzielt, dessen Pfropfhülle SAN beinhaltet. Das ist neu und unerwartet, da SAN bekannterweise mit Polystyrol in jedem Mischungsverhältnis unverträglich ist (s. dazu z.B. Ullmanns Encyklopädie der technischen Chemie, Band 6, 550 (1981)).

2. Durch das Abmischen mit diesem Emulsionspfropfkautschuk wird die Schlagzähigkeit und sogar die Kälteschlagzähigkeit verbessert. Neu ist, daß entgegen bisheriger Erkenntnis auch die Spannungsrißbeständigkeit gegen Frigen und die Schaumhaftung gegenüber Polyurethanschaum verbessert wird.

Die genannte Eigenschaftskombination macht die erfindungsgemäße Formmasse z.B. insbesondere für den Kühlmöbelbereich geeignet.

Zu den Bestandteilen ist dabei das folgende zu sagen:

Komponente A

Die Komponente A ist ein übliches, insbesondere ein schlagzäh modifiziertes Polystyrol mit einem Kautschukgehalt von 3 bis 25 Gew.-%, das durch Polymerisation von Styrol vorzugsweise in Gegenwart eines Kautschuks erhalten wird.

Die meist angewandten Verfahren zur Herstellung schlagzäh modifizierter Styrolpolymerisate sind die Polymerisation in Masse oder Lösung, wie sie beispielsweise in der US-A- 2 694 692 beschrieben ist und Verfahren zur Masse-Suspensionspolymerisation, wie sie beispielsweise in der US-A- 2 862 692 beschrieben sind.

Anstelle eines Teils des Styrols können in untergeordneten Mengen z.B. bis 20 Gew.-% kern- oder seitenkettenalkyliertes Styrol mitverwendet werden.

Als Kautschuk wird ein für die Schlagzähmodifizierung von Styrolpolymerisaten gebräuchlicher natürlicher oder synthetischer Kautschuk eingesetzt. Geeignete Kautschuke im Sinne der Erfindung sind, außer Naturkautschuk, z.B. Polybutadien, Polyisopren, Mischpolymerisate des Butadiens und/oder Isoprens mit Styrol und anderen Comonomeren oder Acrylatkautschuk, die eine Glastemperatur unter -20°C besitzen.

Geeignete schlagzähe Polystyrole sind im Handel, wobei die mittlere Teilchengröße ($d_{50}$-Wert der integralen Masseverteilung) im Bereich von 0,2 bis 7 $\mu$m bei einer VZ der Hartmatrix von 50 bis 100 ml/g (0,5 %ig in Toluol bei 23°C) liegen kann.

Komponente B

Die Komponente B trägt die erfindungswesentlichen Merkmale. Es handelt sich um ein Emulsionspfropfpolymerisat, dessen kautschukelastischer Pfropfkern ein für die Schlagzähmodifizierung von Styrolpolymeren üblicher Kautschuk sein kann, wie er vorstehend unter Komponente A beschrieben ist.

Herstellung des Elastomeren $b_1$

Das Elastomer, die Pfropfgrundlage $b_1$, wird hergestellt, indem Butadien oder n-Butylacrylat allein, gegebenenfalls zusammen mit den weiteren Comonomeren in wäßriger Emulsion in bekannter Weise bei einer Temperatur von 20 bis 100, vorzugsweise von 50 bis 80°C, polymerisiert werden. Es können übliche Emulgatoren, wie Alkalisalze von Alkyl- oder Alkylarylsulfonsäuren, Alkylsulfite, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder Fettsäuren mit 10 bis 18 Kohlenstoffatomen. Es ist günstig, den Emulgator in einer Menge von 0,5 bis 5 Gew.-% insbesondere von 0,5 bis 2 Gew.-%, bezogen auf die bei der Herstellung der Pfropfgrundlage $b_1$ eingesetzten Monomeren, einzusetzen. Im allgemeinen wird bei einem Wasser/Monomeren-Verhältnis von 2 : 1 bis 0,7 : 1 gearbeitet. Als Polymerisationsinitiatoren dienen insbesondere die gebräuchlichen Persulfate, wie Kaliumpersulfat, es können jedoch auch Redox-Systeme zum Einsatz gelangen. Der Initiator wird im allgemeinen in einer Menge von 0,1 bis 1 Gew.-%, bezogen auf die bei der Herstellung der Pfropfgrundlage $a_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natrium pyrophosphat dienen; ferner werden in der Regel 0,1 bis 3 Gew.-% eines Molekulargewichtsreglers - wie Mercaptane, Terpinole oder dimeres $\alpha$-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Poly-

merisats $b_1$ einen $d_{30}$-Wert im Bereich von etwa 75 bis 750 nm, vorzugsweise im Bereich von 100 bis 700 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

Herstellung der Pfropfhülle $b_2$

Die Pfropfhülle, Komponente $b_2$, ist 2-stufig aufgebaut und wird durch sukzessive Polymerisation der Monomeren $b_{21}$ und $b_{22}$ in 2 Verfahrensschritten in Gegenwart des Latex des Elastomeren $b_1$ erzeugt. Hierzu wird zunächst in der ersten Verfahrensstufe Styrol verwendet. Dem Fachmann ist bekannt, wie er dieses Ziel erreicht (Vorlage der Monomeren, zugabe während der Polymerisation und dgl.).

Es ist vorteilhaft, die Pfropfmischpolymerisation in wäßriger Emulsion unter den üblichen, vorstehend aufgeführten Bedingungen durchzuführen. Die Pfropfmischpolymerisation kann zweckmäßig im gleichen System erfolgen wie die Emulsionspoloymerisation zur Herstellung der Pfropfgrundlage $b_1$, wobei, falls notwendig, weiterer Emulgator und Initiator zugegeben werden kann. Das aufzupfropfende Monomere kann dem Reaktionsgemisch auf einmal, absatzweise in mehreren Stufen oder vorzugsweise kontinuierlich während der Polymerisation zugegeben werden. Die Pfropfmischpolymerisation in Gegenwart des Elastomeren wird so geführt, daß der elastomere Kern einen Anteil von 40 bis 95 %, bevorzugt 50 bis 90 %, am Emulsionspfropfkautschuk hat. Demzufolge hat die Gesamtpfropfhülle $b_2$ einen Anteil von 5 bis 60 %, bevorzugt 10 bis 50 %.

Die erste Pfropfhülle $b_{21}$ hat einen Anteil von 5 bis 50 % an der Gesamtpfropfhülle $b_2$, bevorzugt 7 bis 40 %.

In einer zweiten Stufe wird dann die Pfropfmischpolymerisation mit einem Monomerengemisch aus Styrol, $b_{221}$ und Acrylnitril, $b_{222}$ durchgeführt.

Auch der zweite Schritt der Pfropfmischpolymerisation wird zweckmäßigerweise im gleichen System durchgeführt; dabei kann, falls notwendig, weiterer Emulgator und Initiator zugegeben werden. Das aufzupfropfende Monomeren-Gemisch, d.h. die Mischung aus Styrol und Acrylnitril kann dem Reaktionsgemisch auf einmal, absatzweise in mehreren Stufen oder vorzugsweise kontinuierlich während der Polymerisation zugeben werden. Die Pfropfmischpolymerisation des Gemisches von Styrol und Acrylnitril in Gegenwart des Reaktionsproduktes aus der 1. Pfropfstufe wird so durchgeführt, daß der Anteil der 2. Pfropfhülle $b_{22}$ an der Gesamtpfropfhülle 50 bis 95 %, bevorzugt 60 bis 93 %, beträgt und das Verhältnis von $b_{221}$ zu $b_{222}$ von 60 zu 40 bis 90 zu 10 reicht, bevorzugt 65 zu 35 bis 85 zu 15 resultiert. Die Pfropfmischpolymerisate sollen mittlere Teilchengrößen von 75 bis 750 nm besitzen. Geeignete Bedingungen der Pfropfmischpolymerisation, um Teilchengrößen in diesem Bereich zu erhalten, sind bekannt und z.B. in der DE-PS 12 60 135 und der DE-OS 28 28 925 sowie in Journal of Applied Polymer Science, Vol. 9 (1965), S. 2929 bis 2938 beschrieben.

Zusätzlich zu dem reinen Pfropfmischpolymerisat enthält der Kautschuk B noch einen geringeren Anteil einer nicht-elastomeren Hartkomponente, die als Nebenprodukt bei der Pfropfmischpolymerisation entsteht und aus freien, nicht gepfropften Copolymerisaten oder Homopolymerisaten der Pfropfmonomeren besteht. Diese Produkte werden im Sinne der Erfindung zur Komponente B gerechnet.

In den nachstehenden Beispielen werden erfindungsgemäße Abmischungen mit nicht erfindungsgemäßen bzw. mit den zugrundeliegenden schlagzähmodifizierten Polystyrolsorten des Handels verglichen.

Abmischungen von jeweils etwa 4,5 kg wurden auf einem Extruder der Firma Werner & Pfleiderer, Model ZSK 30 bei 230°C Massetemperatur hergestellt. Die angegebenen Gew.-% (w.-%) für die Komponenten der Abmischungen beziehen sich immer auf eine Gesamtmasse von 4,5 kg.

Aus den Mischungen wurden gepreßte Prüfkörper gefertigt und daran folgende Kennzahlen bestimmt - in Klammern die in den Tabellen verwendeten Abkürzungen:

1. Die Reißdehnung (RD) in % nach DIN 53 455;
2. Die Lochkerbschlagzähigkeit ($a_{KL}$) in kJ/m$^2$ nach DIN 53 753;
3. Die Spannungsrißbeständigkeit gegen niedrigsiedende Halogenkohlenwasserstoffe als relative Restreißdehnung (RR); sie wurde wie folgt gemessen:
zur Prüfung wurden Polystyrolprobekörper (gemäß Nr. 3, DIN 53 455) unter Biegespannung (170 mm Bogenradius) einer Atmosphäre aus dem Halogenkohlenwasserstoff R11 (0,5 bar) ausgesetzt. Durch Zugversuch gemäß DIN 53 455 wurde die Restreißdehnung in % nach 50 Minuten Behandlung festgestellt. Die relative Restreißdehnung wird bezogen auf einen Referenzversuch in Luft:

$$\text{relative Restreißdehnung} = \frac{\text{Restreißdehnung in R11}}{\text{Restreißdehnung in Luft}} \times 100\ \%$$

4. Die Haftung an Polyurethanschäumen; sie wurde in folgendem Test ermittelt:
Gepreßte Rundscheiben von 6 cm Durchmesser wurden auf eine Unterlage gebracht und mit einer kommerziell erhältlichen aufschäumenden Polyurethan-Mischung (Sprühdose) übergossen. Nach 24 h wurden die Preßplättchen manuell vom Schaum abgezogen. Die Einstufung "gute Schaumhaftung" erfolgt, wenn dabei der Schaum reißt und die Einstufung "schlechte Schaumhaftung" bei einer Trennung ohne Rückstand an der Grenzfläche von schlagfestem Polystyrol/Polyurethanschaum.

5. Durchstoßversuche nach DIN 53 443 an gespritzten Prüfkörpern (Rundscheiben 60 x 2 mm); angegeben ist die Gesamtschädigungsarbeit $W_{ges}$ in Nm.

Als schlagzähes Polystyrol A wurde verwendet

A1 Ein schlagzähes Polystyrol des Handels mit 8 Polybutadien, einer VZ von 70 ml/g und einer Teilchengröße von im Mittel 2,7 µm.

A2 Ein schlagzähes Polystyrol mit 8 % Polybutadien, einer VZ von 69 ml/g und einer Teilchengröße von 5,5 µm.

Emulsionskautschuke B

| Bezeich-nung | Propfkern [Gew.-%] | 1. Pfropfhülle [Gew.-%] | 2. Pfropfhülle [Gew.-%] | Partikel-größe $d_{50}$ [nm] |
|---|---|---|---|---|
| B1 | 60 n-Butylacr. | 13 PS | 27 S/AN (75/25) | 500-600 |
| B2 | 65 PB-co-PS | 30 PMMA-co-PS | 5 PMMA | 150 |
| B3* (Vgl.) | 78 PB | 22 PMMA | | 120 |
| B4 (Vgl.) | 62 PB | | 38 S/AN (70/30) | 80-150/ 300-600** |
| B5 (Vgl.) | 60 n-Butylacr. | | 40 S/AN | 110 |

\* hergestellt gemäß (4) mit 82 % gepfropftem und 18 % ungepfropftem PMMA
\*\* bimodale Teilchengrößenverteilung

Beispiel 1

Die Verbesserung des schlagzähen Polystyrols hinsichtlich Schlagzähigkeit, Beständigkeit gegen R11 und Schaumhaftung durch zusatz der Komponente B1 zeigt sich an folgenden Ergebnissen (Tabelle 1)

| | A1 (W.-%) | B1 (W.-%) | KG[x] (W.-%) | $a_{KL}$ (kJ/m²) | RR (%) | Schaum-haftung |
|---|---|---|---|---|---|---|
| Vergl. | 100 | --- | 8 | 10,5 | 10 | - |
| erf.gemäß | 86,4 | 13,6 | 15 | 13.0 | 48 | + |
| erf.gemäß | 67,2 | 32,8 | 25 | 22,0 | 49 | + |

[x]Kauschukgehalt

Vergleichsuntersuchung zu Beispiel 1

Es wird der Einfluß, d.h. die Erzielung einer Teilverträglichkeit durch Einführen eines Zwischenpfropfschritts mit Polystyrol gezeigt. Die zum Vergleich dienenden Emulsionspfropfkautschuke B4 und B5 mit reiner SAN-Pfropfhülle bewirkten unabhängig von der Teilchengröße (im Gegensatz zu B1) keine Verbesserung der Schlagzähigkeit, sondern eine Verschlechterung der Zähigkeit ohne Zunahme an Steifigkeit.

| A1 (W.-%) | B4 (W.-%) | B5 (W.-%) | KG$^X$ (W.-%) | $a_{KL}$ (kJ/m$^2$) | RD (%) | |
|---|---|---|---|---|---|---|
| 100 | --- | --- | 8 | 10,5 | 27,9 | Vergleich |
| 86,9 | 13,1 | --- | 15 | 10,0 | 12,9 | erf.gem. |
| 68,4 | 31,6 | --- | 25 | 12,0 | 5,7 | Vergleich |
| 86,4 | --- | 13,6 | 15 | 9,4 | 11,6 | " |
| 67,2 | --- | 32,8 | 25 | 10,0 | 13,3 | " |

$^X$ vgl. Beispiel 1

Beispiel 2

Hier wird anhand eines bereits als spannungsrißbeständig geltenden schlagzähen Polystyrols (A2) gezeigt, wie es durch Zusatz von B1 neben den sonstigen Eigenschaften (Schlagzähigkeit, Kälteschlagzähigkeit bei -40°C, Schaumhaftung) auch noch hinsichtlich Spannungsrißbeständigkeit weiter verbessert werden kann.

| A2 (W.-%) | B1 (W.-%) | KG$^X$ (W.-%) | $a_{KL}$ -40°C (kJ/m$^2$) | | RD (%) | RR (%) | Schaum-haftung | |
|---|---|---|---|---|---|---|---|---|
| 100 | --- | 8 | 9,9 | 7,1 | 28,4 | 75 | – | Vergleich |
| 86,4 | 13,6 | 15 | 15,6 | 9,9 | 27,1 | 105 | + | erf.gem. |
| 67,2 | 32,8 | 25 | 28,5 | 13,8 | 39,5 | 99 | + | erf.gem. |

$^X$vgl. Beispiel 1

Beispiel 3

Dieses Beispiel zeigt im Vergleich die Überlegenheit von B1 (S/SAN-gepfropft) gegenüber acrylatgepfropften Emulsionskautschuken (B2 und B3) im anwendungsnahen, multiaxialen Durchstoßtest an gespritzten Rundscheiben. Es ist bekannt, daß dieser Test sehr empfindlich Unverträglichkeiten aufzeigt.

| A1 (W.-%) | B1 (W.-%) | B2 (W.-%) | B3 (W.-%) | KG$^X$ (W.-%) | $a_{KL}$ (kJ/m$^2$) | Wges (Nm) | |
|---|---|---|---|---|---|---|---|
| 100 | --- | --- | --- | 8 | 10,5 | 10,9 | Vergleich |
| 86,4 | 13,6 | --- | --- | 15 | 13,0 | 8,6 | erf.gemäß |
| 67,2 | 32,8 | --- | --- | 25 | 22,0 | 13,7 | " |
| 87,6 | --- | 12,4 | --- | 15 | 12,0 | 6,3 | Vergleich |
| 70,1 | --- | 29,9 | --- | 25 . | 27,0 | 10,4 | " |
| 89 | --- | --- | 11 | 15,7 | 14,3 | 3,3 | Vergleich |
| 78 | --- | --- | 22 | 23,4 | 24,9 | 8,1 | " |

$^X$ vgl. Beispiel 1

## Patentansprüche

1. Formmasse aus einer Matrix aus schlagzäh modifiziertem Polystyrol und in Form diskreter Partikel eingelagertem Kautschuk, enthaltend

   (A) wenigstens 50 Gew.-% Polystyrol A und

   (B) eine wirksame Menge von bis zu 50 Gew.-% eines Pfropfkautschuks B aus

   ($b_1$) 40 bis 95 Gew.-% eines kautschukelastischen Pfropfkerns $b_1$ und

   ($b_2$) 5 bis 60 Gew.-% einer Pfropfhülle $b_2$, nämlich

   ($b_{21}$) 5 bis 50 Gew.-% einer ersten Pfropfhülle $b_{21}$ aus Styrol und

   ($b_{22}$) 50 bis 95 Gew.-% einer zweiten Pfropfhülle $b_{22}$ aus

   ($b_{221}$) 60 bis 90 Gew.-% Styrol $b_{221}$ und

   ($b_{222}$) 10 bis 40 Gew.-% Acrylnitril $b_{222}$,

   wobei A und B, $b_1$ und $b_2$, $b_{21}$ und $b_{22}$ sowie $b_{221}$ und $b_{222}$ sich jeweils zu 100 Gew.-% ergänzen.

2. Formmasse nach Anspruch 1, gekennzeichnet durch folgende Zusammensetzung:

   60 bis 90 Gew.-% A;

   10 bis 40 Gew.-% B;

   50 bis 90 Gew.-% $b_1$;

   10 bis 50 Gew.-% $b_2$;

   7 bis 40 Gew.-% $b_{21}$;

   60 bis 93 Gew.-% $b_{22}$;

   65 bis 85 Gew.-% $b_{221}$;

   15 bis 35 Gew.-% $b_{222}$.

## Claims

1. A molding material comprising a matrix of high impact polystyrene and rubber incorporated in the form of discrete particles, containing

   (A) not less than 50% by weight of polystyrene A and

   (B) an effective amount of up to 50% by weight of a graft rubber B of

   ($b_1$) from 40 to 95% by weight of an elastomeric core $b_1$ and

   ($b_2$) from 5 to 60% by weight of a shell $b_2$, ie.

   ($b_{21}$) from 5 to 50% by weight of a first shell $b_{21}$ of styrene and

   ($b_{22}$) from 50 to 95% by weight of a second shell $b_{22}$ of

($b_{221}$) from 60 to 90% by weight of styrene $b_{221}$ and
($b_{222}$) from 10 to 40% by weight of acrylonitrile $b_{222}$,
A and B, $b_1$ and $b_2$, $b_{21}$ and $b_{22}$ and $b_{221}$ and $b_{222}$ summing in each case to 100% by weight.

2. A molding material as claimed in claim 1, which has the following composition:
from 60 to 90% by weight of A,
from 10 to 40% by weight of B,
from 50 to 90% by weight of $b_1$,
from 10 to 50% by weight of $b_2$,
from 7 to 40% by weight of $b_{21}$,
from 60 to 93% by weight of $b_{22}$,
from 65 to 85% by weight of $b_{221}$ and
from 15 to 35% by weight of $b_{222}$.

**Revendications**

1. Masse à mouler, se composant d'une matrice de polystyrène modifié dans le sens de la résistance au choc et de caoutchouc inclus sous forme de particules discrètes, contenant
(A) au moins 50% en poids de polystyrène A et
(B) une quantité efficace, pouvant aller jusqu'à 50% en poids, d'un caoutchouc greffé B composé de
($b_1$) 40 à 95% en poids d'un noyau de greffage $b_1$ ayant l'élasticité du caoutchouc et de
($b_2$) 5 à 60% en poids d'une enveloppe de greffage $b_2$, à savoir
($b_{21}$) 5 à 50% en poids d'une première enveloppe de greffage $b_{21}$ en styrène et
($b_{22}$) 50 à 95% en poids d'une seconde enveloppe de greffage $b_{22}$ constituée par
($b_{221}$) 60 à 90% en poids de styrène $b_{221}$ et
($b_{222}$) 10 à 40% en poids d'acrylonitrile $b_{222}$,
chacune des sommes A et B, $b_1$ et $b_2$, $b_{21}$ et $b_{22}$ ainsi que $b_{221}$ et $b_{222}$ étant égale à 100% en poids.

2. Masse à mouler selon la revendication 1, caractérisée par la composition suivante:
60 à 90% en poids de A;
10 à 40% en poids de B;
50 à 90% en poids de $b_1$;
10 à 50% en poids de $b_2$;
7 à 40% en poids de $b_{21}$;
60 à 93% en poids de $b_{22}$;
65 à 85% en poids de $b_{221}$;
15 à 35% en poids de $b_{222}$.